# EUROPÄISCHE PATENTANMELDUNG

(11) **EP 2 058 910 A2**
(43) Veröffentlichungstag der Anmeldung: **13.05.2009**
(21) Anmeldenummer: 08018844.4
(22) Anmeldetag: 28.10.2008
(51) Int. Cl.: H02G 3/04

(54) **Versorgungsvorrichtung**

(30) Priorität: 06.11.2007 DE 102007052850; 10.01.2008 DE 102008003860
(71) Anmelder: VS Vereinigte Spezialmöbelfabriken GmbH & Co. KG, 97941 Tauberbischofsheim (DE)
(72) Erfinder: Weber, Reinhard, 32425 Minden (DE)
(74) Vertreter: Söltenfuss, Dirk Christian

(57) **Zusammenfassung**

Eine Versorgungsvorrichtung (16), insbesondere für Arbeitsräume wie Klassenzimmer, besitzt einen Profilkörper (20) zum Bereitstellen wenigstens eines Leuchtenelements (30, 32) und/oder wenigstens eines Benutzeranschlusses (26), das/der mit einer externen Medienleitung verbindbar ist, und wenigstens eine Montagevorrichtung (22) zum Montieren des Profilkörpers (20). Um die Raumakustik zum Beispiel in einem Klassenzimmer zu verbessern, weist die Versorgungsvorrichtung (16) ferner wenigstens eine Akustikfläche (34, 36) mit einer Schallabsorptionsfläche und/oder einer Schallreflexionsfläche auf.

## Beschreibung

Die vorliegende Erfindung betrifft eine Versorgungsvorrichtung, insbesondere für Arbeitsräume wie zum Beispiel Klassenzimmer und dergleichen, nach dem Oberbegriff des Patentanspruchs 1.

Eine Versorgungsvorrichtung dieser Art ist zum Beispiel aus der DE 20 2005 003 257 U1 bekannt. Die bekannte Versorgungsvorrichtung, die auch als Medienverteiler bezeichnet wird, besteht im Wesentlichen aus einem über Träger an einer Raumdecke montierbaren (Hohl-)Profilkörper, der verschiedene Versorgungsleitungen, die mit gebäudeseitigen Medienleitungen verbindbar sind, sowie verschiedene Benutzeranschlüsse und Leuchtenelemente, die mit den entsprechenden Versorgungsleitungen im Profilkörper gekoppelt sind, aufnimmt.

Mit solchen Versorgungsvorrichtungen kann man zum Beispiel multifunktionale Klassenzimmer aufbauen, die aufgrund der zahlreichen und verschiedenen zur Verfügung gestellten Benutzeranschlüsse und Beleuchtungsmöglichkeiten je nach aktuellem Bedarf beispielsweise als "normale" Klassenzimmer oder als Labor genutzt werden können.

Zusätzlich zu dieser Multifunktionalität wird bei Arbeitsräumen im Allgemeinen und speziell auch im Fall von Schulräumen zunehmend auch der Wunsch nach einer guten Raumakustik mit reduzierten Störgeräuschen geäußert.

Der vorliegenden Erfindung liegt die Aufgabe zugrunde, eine Versorgungsvorrichtung der eingangs genannten Art zu schaffen, die gleichzeitig die Raumakustik verbessert.

Diese Aufgabe wird gelöst durch eine Versorgungsvorrichtung mit den Merkmalen des Patentanspruchs 1. Vorteilhafte Ausgestaltungen und Weiterbildungen der Erfindung sind Gegenstand der abhängigen Ansprüche.

Die Versorgungsvorrichtung besitzt einen Profilkörper zum Bereitstellen wenigstens eines Leuchtenelements und/oder wenigstens eines Benutzeranschlusses, das/der mit einer externen Medienleitung verbindbar ist, und wenigstens eine Montagevorrichtung zum Montieren des Profilkörpers und ist dadurch gekennzeichnet, dass sie ferner wenigstens eine Akustikfläche aufweist.

Die vorteilhafterweise in einem Arbeitsraum wie zum Beispiel einem Klassenzimmer einsetzbare Versorgungsvorrichtung der Erfindung hat einen Profilkörper, der dem Benutzer wenigstens ein Leuchtenelement und/oder wenigstens einen Benutzeranschluss bereitstellt, das/der zum Beispiel über eine im Profilkörper verlaufende Versorgungsleitung mit einer externen, d.h. zum Beispiel gebäudeseitigen Medienleitung verbindbar ist. Auf diese Weise kann der mit der Versorgungsvorrichtung ausgestattete Arbeitsraum multifunktional und variabel genutzt werden.

Ferner weist die Versorgungsvorrichtung der Erfindung wenigstens eine Akustikfläche, d.h. eine akustisch wirksame Fläche auf. Auf diese Weise kann die Versorgungsvorrichtung gleichzeitig genutzt werden, die Akustik in dem Arbeitsraum gezielt zu verändern, ohne dass zusätzliche Einheiten oder Komponenten in dem Arbeitsraum installiert werden müssen, auch wenn diese natürlich ebenfalls noch vorhanden sein können.

In einer Ausführungsform der Erfindung enthält die wenigstens eine Akustikfläche eine Akustikfläche, die über eine Halterung an der wenigstens einen Montagevorrichtung und/oder dem Profilkörper befestigt ist. Dabei kann die Halterung wahlweise so ausgebildet sein, dass die Akustikfläche zwischen wenigstens zwei Stellungen schwenkbar ist oder dass die Akustikfläche in einer Stellung relativ zum Profilkörper gehalten ist.

In einer weiteren Ausführungsform der Erfindung enthält die wenigstens eine Akustikfläche alternativ oder zusätzlich eine Akustikfläche, die an einem Oberflächenabschnitt des Profilkörpers vorgesehen ist.

Zur Verbesserung der Akustik zum Beispiel in einem Arbeitsraum kann die Akustikfläche eine Schallabsorptionsfläche, eine Schallreflexionsfläche oder wenigstens eine Schallabsorptionsfläche und wenigstens eine Schallreflexionsfläche enthalten. Dabei kann die Akustikfläche außerdem aus einem akustisch wirksamen Material gefertigt und/oder in einer akustisch wirksamen Form gebildet sein.

In einer weiteren Ausgestaltung der Erfindung ist die Akustikfläche wenigstens teilweise optisch reflektierend ausgebildet. Auf diese Weise kann die Akustikfläche zum Beispiel in vorteilhafter Weise mit einem Leuchtenelement, insbesondere einem Leuchtenelement zur indirekten Beleuchtung, am Profilkörper zusammenwirken.

In einer noch weiteren Ausgestaltung der Erfindung kann die wenigstens eine Montagevorrichtung zur Deckenmontage, zur Wandmontage und/oder zum Aufstellen des Profilkörpers ausgebildet sein. Dabei ist die wenigstens eine Montagevorrichtung vorzugsweise höhenverstellbar ausgebildet.

Das wenigstens eine Leuchtenelement kann ein Leuchtenelement zur direkten Beleuchtung und/oder ein Leuchtenelement zur indirekten Beleuchtung enthalten.

Der wenigstens eine Benutzeranschluss ist zum Beispiel ausgewählt aus Stromanschlüssen, Wasseranschlüssen, Gasanschlüssen, Druckluftanschlüssen, Datenanschlüssen und Kommunikationsanschlüssen.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Draufsicht auf ein Klassenzimmer, das mit mehreren Versorgungsvorrichtungen gemäß der Erfindung ausgestattet ist;
- Fig. 2: eine schematische Seitenansicht eines Arbeitsplatzes in dem Klassenzimmer von Fig. 1;
- Fig. 3: eine schematische Schnittansicht einer Versorgungsvorrichtung gemäß einem ersten Ausführungsbeispiel der vorliegenden Erfindung;

- Fig. 4: eine schematische Schnittansicht einer Versorgungsvorrichtung gemäß einem zweiten Ausführungsbeispiel der vorliegenden Erfindung;
- Fig. 5 bis: 7schematische Schnittansichten einer Versorgungsvorrichtung gemäß einem dritten Ausführungsbeispiel der vorliegenden Erfindung; und
- Fig. 8: eine schematische Draufsicht der Versorgungsvorrichtung von Fig. 5 bis 7 von unten.

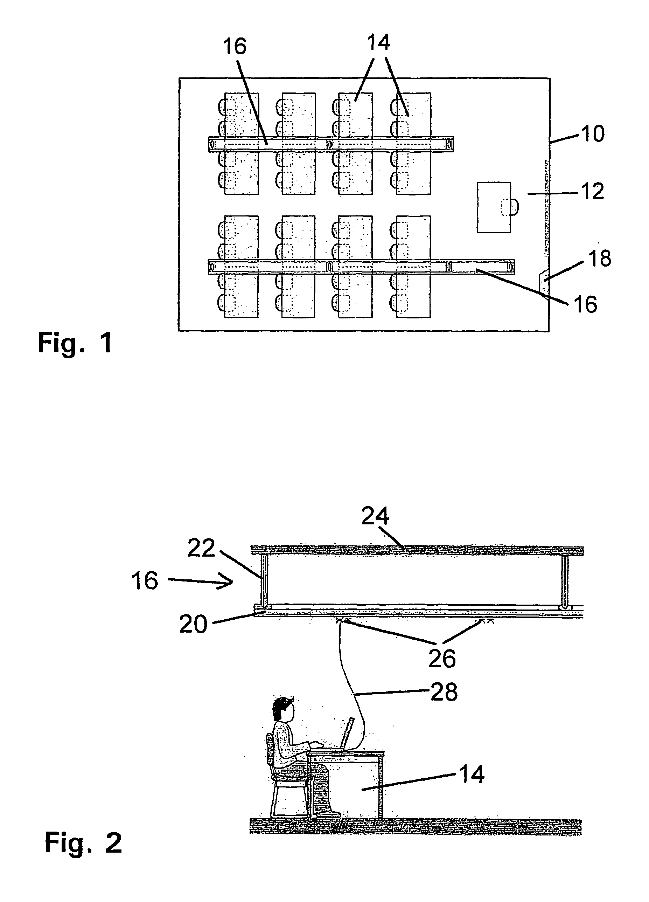

Bezug nehmend zunächst auf Fig. 1 und 2 wird nun der Aufbau eines multifunktionalen Klassenzimmers als Beispiel eines Arbeitsraums mit einer oder mehreren Versorgungsvorrichtungen der Erfindung beschrieben.

In dem Klassenzimmer 10 sind in üblicher Weise ein Lehrerplatz 12 und eine Vielzahl von Arbeitsplätzen 14 für Schüler vorgesehen, wobei die Anordnung von Fig. 1 nur beispielhaft ausgewählt ist. In dem Klassenzimmer 10 sind beispielhaft zwei Reihen von Versorgungsvorrichtungen 16 oberhalb der Schülerarbeitsplätze 14 sowie ein Steuerschrank 18 als Steuervorrichtung zum Steuern der Versorgungsvorrichtungen 16 angeordnet. Die Steuervorrichtung 18 kann natürlich ebenso außerhalb des Klassenzimmers 10 angeordnet werden. Wie in Fig. 2 dargestellt, bestehen die Versorgungsvorrichtungen 16 im Wesentlichen aus einem Profilkörper 20, der mit Hilfe von wenigstens einem Träger (Montagevorrichtung) 22 an der Raumdecke 24 montiert ist.

Der Profilkörper 20, der im Allgemeinen als ein Hohlprofilkörper ausgebildet ist, kann verschiedene Versorgungsleitungen, Benutzeranschlüsse 26 und Leuchtenelemente aufweisen. Wie in Fig. 2 angedeutet, kann ein Schüler an einem Arbeitsplatz 14 zum Beispiel bei Bedarf seinen Laptop über entsprechende Verbindungsleitungen 28 an einen Stromversorgungsanschluss, einen Datenanschluss und/oder einen Internetanschluss der Benutzeranschlüsse 26 der Versorgungsvorrichtung 16 anschließen. Durch die an der Decke montierte Versorgungsvorrichtung 16 werden in vorteilhafter Weise "Stolperfallen" durch Kabelverbindungen zu Anschlüssen im Boden und an Seitenwänden vermieden. Alternativ kann das Klassenzimmer 10 zum Beispiel auch als ein Labor genutzt werden, indem den Arbeitsplätzen 14 durch eine entsprechende Bedienung der Steuervorrichtung 18 die Benutzeranschlüsse 26 für Druckluft, Gas, Wasser und dergleichen bereitgestellt werden.

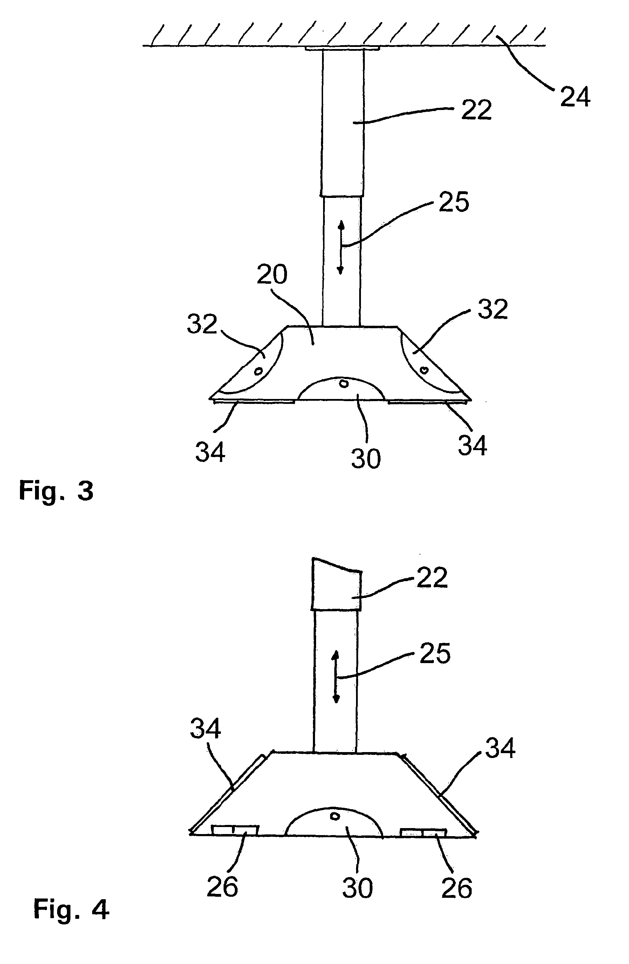

Unter Bezug auf Fig. 3 bis 8 werden nachfolgend verschiedene Ausführungsbeispiele von erfindungsgemäßen Versorgungsvorrichtungen 16 näher beschrieben.

Im ersten Ausführungsbeispiel, das in Fig. 3 dargestellt ist, ist der Profilkörper 20 über Träger 22 an einer Raumdecke 24 montierbar. Dabei ist der Träger (Montagevorrichtung der Erfindung) 22 vorzugsweise höhenverstellbar ausgebildet, zum Beispiel in der Art eines teleskopartig längenverstellbaren Halters (siehe Doppelpfeil 25. Der Profilkörper 20 hat an seiner Unterseite ein zentral angeordnetes Leuchtenelement 30 zur direkten Beleuchtung des Arbeitsplatzes 14 und an seinen Längsseiten schräg nach oben gerichtete Leuchtenelemente 32 zur indirekten Beleuchtung des Klassenzimmers 10. Die Erfindung ist dabei auf keine spezielle Art von Leuchtenelementen eingeschränkt und die Anordnung der Leuchtenelemente 30, 32 kann sich auch über die Länge des Profilkörpers 20 verändern.

Zusätzlich weist dieser Profilkörper 20 an seiner Unterseite (allgemein dem Arbeitsplatz 14 zugewandt, unten in Fig. 3) an Abschnitten, die nicht für das Leuchtenelement 30 benötigt werden, Akustikflächen 34 auf. Bei diesen Akustikflächen 34 handelt es sich wahlweise um Schallabsorptionsflächen, um Schallreflexionsflächen oder um eine kombinierte Anordnung solcher Flächentypen. Außerdem sind die Akustikflächen 34 beispielsweise aus einem akustisch wirksamen Material gefertigt und/oder in einer akustisch wirksamen Form ausgebildet. Diese Akustikflächen 34 sollen insbesondere Störgeräusche im Arbeitsraum reduzieren, können gegebenenfalls aber auch eine günstigere Verteilung der Schallwellen im Raum bewirken.

Die Akustikflächen 34 an den Versorgungsvorrichtungen 16 können selbstverständlich auch mit weiteren Akustikflächen an Decken und Wänden des Raums oder an Möbelstücken im Raum zusammenwirken.

Im zweiten Ausführungsbeispiel von Fig. 4 besitzt der Hohlprofilkörper 20, der ebenfalls über vorzugsweise höhenverstellbare Träger 22 an einer Raumdecke 24 montiert ist, an seiner dem Arbeitsplatz 14 zugewandten Unterseite ein mittig angeordnetes, in Längsrichtung des Profilkörpers 20 verlaufendes Leuchtenelement 30 zur direkten Beleuchtung des Arbeitsplatzes 14 sowie neben dem Leuchtenelement 30 platzierte Benutzeranschlüsse 26. Diese Benutzeranschlüsse 26 sind zum Beispiel ausgewählt aus Stromanschlüssen, Wasseranschlüssen, Gasanschlüssen, Druckluftanschlüssen, Datenanschlüssen, Kommunikationsanschlüssen und dergleichen und sind über entsprechende Versorgungsleitungen (nicht dargestellt) im Hohlprofilkörper 20 mit externen, d.h. in diesem Fall gebäudeseitigen Medienleitungen verbindbar. Die jeweiligen Verbindungen werden dabei mittels der Steuervorrichtung 18 gesteuert, können wahlweise aber auch kontinuierlich zur Verfügung gestellt werden.

In diesem Beispiel sind die Akustikflächen 34 an den schräg nach oben geneigten Längsseiten des Profilkörpers 20 vorgesehen, wie in Fig. 4 angedeutet. Im Übrigen gelten für die Akustikflächen 34 wieder die oben in Zusammenhang mit dem ersten Ausführungsbeispiel von Fig. 3 gemachten Ausführungen.

Es ist zu beachten, dass die Anzahlen, Größen und Formen der an dem Profilkörper 20 vorgesehenen Akustikflächen 34 nicht auf die in Fig. 3 und 4 dargestellten Ausführungsbeispiele beschränkt sind. Insbesondere können grundsätzliche alle Oberflächenabschnitte des Profilkörpers 20 für die Akustikflächen 34 verwendet werden, die nicht für ein Leuchtenelement 30, 32, einen Benutzeranschluss 26 oder die Montagevorrichtung 22 benötigt werden. Außerdem können die beiden Ausführungsbeispiele von Fig. 3 und 4 auch kombiniert werden, indem zum Beispiel der Profilkörper 20 der Versorgungsvorrichtung 16 in seiner Längsrichtung abschnittweise gemäß Fig. 3 und abschnittweise gemäß Fig. 4 konstruiert ist.

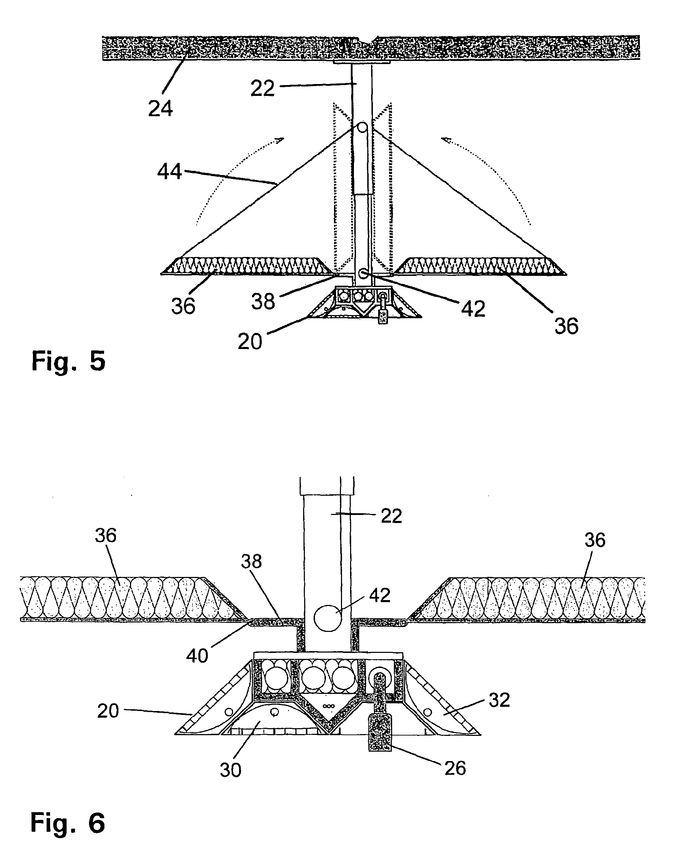

Es wird nun ein drittes Ausführungsbeispiel einer Versorgungsvorrichtung Bezug nehmend auf Fig. 5 bis 8 näher beschrieben.

Während in den ersten und zweiten Ausführungsbeispielen, die oben anhand von Fig. 3 und 4 im Detail erläutert worden sind, die Akustikflächen 34 an Oberflächenabschnitten des Profilkörpers 20 vorgesehen waren, an denen keine Leuchtenelemente 30, 32 oder Benutzeranschlüsse 26 bereitgestellt wurden, hat die Versorgungsvorrichtung 16 dieses Ausführungsbeispiels Akustikflächen 36, die über eine Halterung 38 an dem Träger (Montagevorrichtung) 22 zur Deckenmontage des Profilkörpers 20 befestigt sind.

Wie in Fig. 5 bis 7 veranschaulicht, sind die Akustikflächen 36 in diesem Fall im Wesentlichen plattenförmige Konstruktionen, die zumindest teilweise aus einem akustisch wirksamen Material, d.h. zum Beispiel einem Material mit schallabsorbierenden oder schallreflektierenden Eigenschaften gebildet sind. Beispielsweise sind die Akustikflächen 36 aus einem schallabsorbierenden Dämmmaterial gebildet, auf dessen dem Arbeitsplatz 14 zugewandter Seite ein Lochblech angeordnet ist.

Der Profilkörper 20, insbesondere ein Hohlprofilkörper, stellt wahlweise verschiedene Leuchtenelemente 30 zur direkten Beleuchtung eines Arbeitsplatzes 14, Leuchtenelemente 32 zur indirekten Raumbeleuchtung und/oder Benutzeranschlüsse 26 bereit. Die Anzahlen, Auswahlen und Anordnungspositionen dieser Komponenten sind in keiner besonderen Weise eingeschränkt, d.h. Fig. 5 bis 8 zeigen nur eine beispielhafte Ausführungsform.

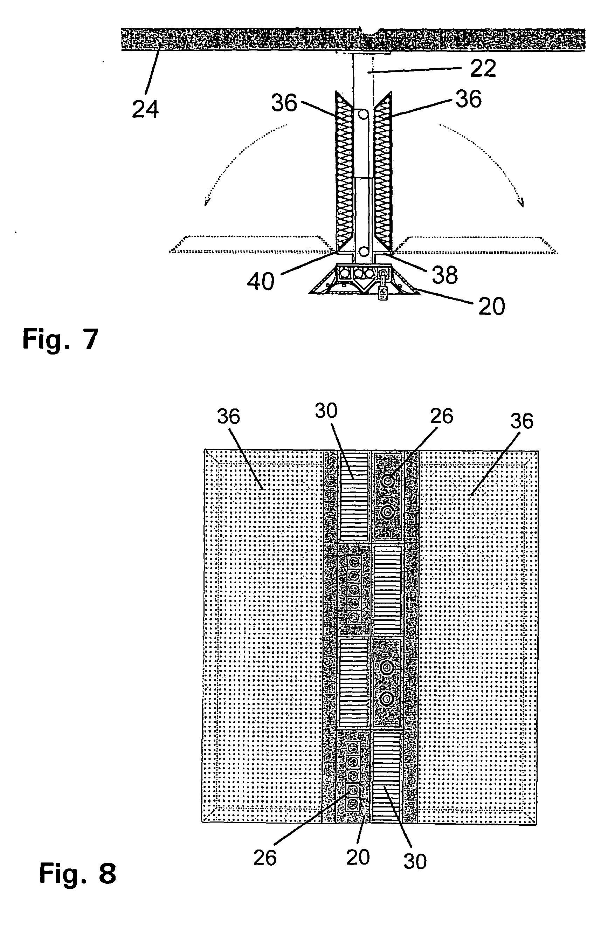

Außerdem zeigen Fig. 5 bis 7 jeweils einen Querschnitt durch den Profilkörper 20, bei dem auf einer Seite zur Längsmittelachse versetzt ein Leuchtenelement 30 und auf der anderen Seite ein Benutzeranschluss 26 vorgesehen ist. Wie in der Draufsicht der Versorgungsvorrichtung 16 von unten in Fig. 8 veranschaulicht, kann diese Anordnung von Leuchtenelement 30 und Benutzeranschlüssen 26 in vorteilhafter Weise auch wechselweise erfolgen, wobei zusätzlich auch die Arten der vorgesehenen Benutzeranschlüsse 26 in stetem Wechsel in Längsrichtung des Profilkörpers 20 erfolgen können. Natürlich kann auch nur ein mittig angeordnetes Leuchtenelement 30 an der Unterseite des Profilkörpers vorgesehen sein (siehe z.B. Fig. 3 und 4).

Die Akustikflächen 36 sind in diesem Ausführungsbeispiel jeweils über ein Drehgelenk 40 mit der Halterung 38 verbunden. Die Halterung 38 ist dabei in diesem Ausführungsbeispiel an dem Träger 22 des Profilkörpers 20 befestigt. Alternativ ist es auch möglich, die Halterung 38 für die Akustikflächen 36 am Profilkörper 20 selbst anzubringen. Der Begriff "Halterung" umfasst sowohl tragende Verbindungselemente, wie sie beispielhaft in Fig. 5 bis 7 dargestellt sind, als auch direkte Befestigungsmittel wie Verschraubungen und dergleichen.

Die Akustikflächen 36 können bei dieser Art der Befestigung über das Drehgelenk 40 zwischen einer ersten, im Wesentlichen horizontalen Stellung (Fig. 5 und 6) und einer zweiten, im Wesentlichen vertikalen Stellung (Fig. 7) bewegt werden, um je nach Bedarf unterschiedliche Beeinflussungen der Raumakustik zu bewirken. Natürlich sind auch weitere Zwischenstellungen der Akustikflächen 36, die in den Figuren nicht gezeigt sind, denkbar. Auch müssen die zwei Endstellungen der Akustikflächen 36 nicht der horizontalen bzw. vertikalen Ausrichtung entsprechen. Außerdem sind die Akustikflächen 36 in den jeweils gewählten Stellungen vorzugsweise feststellbar.

Die Verstellung der Akustikflächen 36 erfolgt in dem gezeigten Ausführungsbeispiel durch eine innerhalb des Trägers 22 angeordnete Seilspindel 42. Ein Ende eines Abspannseils 44 ist mit dieser Seilspindel 42 verbunden und sein anderes Ende ist mit dem äußeren Ende, d.h. dem der Halterung 38 abgewandten Ende der Akustikfläche 36 verbunden. Durch Auf- und Abwickeln des Abspannseils 44 auf die bzw. von der Seilspindel 42 wird entsprechend der Neigungswinkel der Akustikfläche 36 eingestellt. Das Abspannseil 44 dient dabei außerdem der stabilen Abstützung der Akustikfläche 36, insbesondere in der in Fig. 5 und 6 dargestellten horizontalen Ausrichtung.

Die dem Profilkörper 20 bzw. dem Arbeitsplatz 14 zugewandte Seite der Akustikflächen, d.h. ihre Unterseite in diesem Beispiel, kann in einer weiteren Ausführungsform zusätzlich zumindest teilweise optisch reflektierend ausgebildet sein. Dies kann zum Beispiel durch eine entsprechende Materialauswahl oder eine Beschichtung der Akustikfläche 36 erfolgen. Diese Ausgestaltung der Akustikflächen 36 ist besonders dann von Vorteil, wenn der Profilkörper 20 der Versorgungsvorrichtung 16 ein Leuchtenelement 32 zur indirekten Raumbeleuchtung bereitstellt, wie dies in dem Ausführungsbeispiel der Fig. 5 bis 7 der Fall ist. Die von diesem Leuchtenelement 32 ausgehenden Lichtstrahlen werden dann an den Unterseiten der Akustikflächen 36 in effektiver Weise reflektiert (anstatt wie herkömmlich zum Beispiel an einer Raumdecke 24).

Auch in dem dritten Ausführungsbeispiel von Fig. 5 bis 8 ist der Träger (Montagevorrichtung) 22 vorzugsweise höhenverstellbar ausgebildet.

Das dritte Ausführungsbeispiel hat gegenüber den oben beschriebenen Beispielen von Fig. 3 und 4 den Vorteil, dass die Akustikflächen 36 im Vergleich zu den Akustikflächen 34 größere akustisch wirksame Flächen haben und aufgrund ihrer größeren Dicke akustisch wirksamer ausgebildet sein können. Dies wird auch aus den in Fig. 5 bis 8 dargestellten Größenverhältnissen zwischen den Akustikflächen 36 und dem Profilkörper 20 deutlich.

Die vorliegende Erfindung ist selbstverständlich nicht nur auf die oben beschriebenen Ausführungsbeispiele und Abwandlungen beschränkt. So sind zum Beispiel die folgenden Modifikationen und Varianten denkbar.

Auch im Fall des dritten Ausführungsbeispiels von Fig. 5 bis 7 mit den Akustikflächen 36 kann auch der Profilkörper 20 an geeigneten Oberflächenabschnitten mit Akustikflächen 34 versehen sein. Mit anderen Worten ist auch eine Kombination des dritten Ausführungsbeispiels mit dem ersten oder zweiten Ausführungsbeispiel möglich, wobei natürlich auch jeweils die oben genannten Abwandlungen Berücksichtigung finden können.

In den obigen Ausführungsbeispielen sind die jeweiligen Akustikflächen 34 bzw. 36 symmetrisch an der Versorgungsvorrichtung 16 vorgesehen. Es ist jedoch ebenso eine asymmetrische Anordnung möglich. Zum Beispiel kann in dem Ausführungsbeispiel von Fig. 5 bis 8 auch nur eine Akustikfläche 36 auf einer Seite der Montagevorrichtung 22 angebracht werden.

Während in dem obigen dritten Ausführungsbeispiel von Fig. 5 bis 8 die Akustikflächen 36 mittels des Drehgelenks 40 schwenkbar an der Halterung 38 angebracht sind, ist es in einer alternativen Ausführungsform auch möglich, die Akustikflächen 36 ohne Drehgelenk 40 direkt an der Halterung 38 zu befestigen, sodass die Akustikflächen 36 in einer festen Stellung relativ zum Profilkörper 20 angebracht sind. Diese eine feste Stellung der Akustikflächen 36 entspricht dann üblicherweise der in Fig. 5, 6 und 8 gezeigten, ohne auf diese beschränkt zu sein.

Während in dem obigen dritten Ausführungsbeispiel die Akustikflächen 36 über die Halterung 38 an dem Träger (Montagevorrichtung) 22 zur Deckenmontage des Profilkörpers 20 befestigt sind, ist es alternativ auch möglich, die Halterung 38 an dem Profilkörper 20 anzubringen.

In den obigen Ausführungsbeispielen ist die Versorgungsvorrichtung 16 jeweils mit einer oder mehreren Montagevorrichtungen 22 zur Deckenmontage des Profilkörpers 20 ausgestattet. Es ist allerdings auch möglich, die wenigstens eine Montagevorrichtung 22 zusätzlich oder alternativ zur Wandmontage und/oder zum Aufstellen des Profilkörpers 20 auszubilden. Die Unterseiten des Profilkörpers 20 und der Akustikflächen 36 in den obigen Ausführungsbeisielen entsprechen in diesem Fall allgemein den dem Arbeitsplatz 14 zugewandten Seiten der Versorgungsvorrichtung 16, die horizontalen und vertikalen Ausrichtungen der Akustikflächen 36 bezeichnen dann einfach eine ausgefahrene bzw. eine eingeklappte Stellung. Es sind auf diese Weise weitere Variationsmöglichkeiten zum Aufbau multifunktionaler Arbeitsräume 10 gegeben.

Die vorliegende Erfindung kombiniert in vorteilhafter Weise einen (an sich bekannten) Profilkörper mit Leuchtenelementen und/oder Benutzeranschlüssen mit einer Akustikfunktion durch die Akustikflächen 34, 36. Die Versorgungsvorrichtung 16 der Erfindung ist dabei natürlich nicht auf spezielle Profilkörper 20 und spezielle Arten, Anordnungen, Anzahlen, u.dgl. der Leuchtenelemente und Benutzeranschlüsse eingeschränkt.

Die Verwendung der wie oben beschrieben aufgebauten Versorgungsvorrichtungen 16 ermöglicht einerseits das Bilden von zum Beispiel multifunktionalen Klassenzimmern und schafft gleichzeitig eine verbesserte Raumakustik, ohne hierzu zusätzliche Komponenten bzw. ein große Anzahl zusätzlicher Komponenten in dem jeweiligen Raum anbringen bzw. aufstellen zu müssen. Die erfindungsgemäßen Versorgungsvorrichtungen 16 können jedoch auch mit anderen Akustikflächen an Decken, Wänden, Möbeln und dergleichen zusammenwirken bzw. deren Wirkungen ergänzen und beeinflussen.

Selbstverständlich ist die vorliegende Erfindung nicht nur auf die Anwendung in Klassenzimmern beschränkt; die erfindungsgemäßen Versorgungsvorrichtungen können in vorteilhafter Weise ebenso in anderen Arbeitsräumen wie Labors, Großraumbüros, Krankenzimmern und dergleichen eingesetzt werden.

### BEZUGSZIFFERNLISTE

- 10: Klassenzimmer
- 12: Lehrerplatz
- 14: Arbeitsplätze
- 16: Versorgungsvorrichtung
- 18: Steuervorrichtung
- 20: Profilkörper
- 22: Montagevorrichtung (z.B. Träger)
- 24: Raumdecke
- 25: Doppelpfeil
- 26: Benutzeranschlüsse
- 28: Verbindungsleitung
- 30: Leuchtenelement (direkte Beleuchtung)
- 32: Leuchtenelement (indirekte Beleuchtung)
- 34: Akustikfläche
- 36: Akustikfläche
- 38: Halterung
- 40: Drehgelenk
- 42: Seilwinde
- 44: Abspannseil

## Patentansprüche

1. Versorgungsvorrichtung (16), mit einem Profilkörper (20) zum Bereitstellen wenigstens eines Leuchtenelements (30, 32) und/oder wenigstens eines Benutzeranschlusses (26), das/der mit einer externen Medienleitung verbindbar ist; und wenigstens einer Montagevorrichtung (22) zum Montieren des Profilkörpers (20),
**dadurch gekennzeichnet,**
**dass** die Versorgungsvorrichtung (16) ferner wenigstens eine Akustikfläche (34, 36) aufweist.

2. Versorgungsvorrichtung nach Anspruch 1,
**dadurch gekennzeichnet,**
**dass** die wenigstens eine Akustikfläche eine Akustikfläche (36) enthält, die über eine Halterung (38) an der wenigstens einen Montagevorrichtung (22) und/oder dem Profilkörper (20) befestigt ist.

3. Versorgungsvorrichtung nach Anspruch 2,
**dadurch gekennzeichnet,**
**dass** die Halterung (38) derart ausgebildet ist, dass die Akustikfläche (36) zwischen wenigstens zwei Stellungen schwenkbar ist.

4. Versorgungsvorrichtung nach Anspruch 2,
**dadurch gekennzeichnet,**
**dass** die Halterung (38) derart ausgebildet ist, dass die Akustikfläche (36) in einer Stellung relativ zum Profilkörper (20) gehalten ist.

5. Versorgungsvorrichtung nach einem der Ansprüche 1 bis 4,
**dadurch gekennzeichnet,**
**dass** die wenigstens eine Akustikfläche eine Akustikfläche (34) enthält, die an einem Oberflächenabschnitt des Profilkörpers (20) vorgesehen ist.

6. Versorgungsvorrichtung nach einem der Ansprüche 1 bis 5,
**dadurch gekennzeichnet,**
**dass** die Akustikfläche (34, 36) eine Schallabsorptionsfläche enthält.

7. Versorgungsvorrichtung nach einem der Ansprüche 1 bis 5,
**dadurch gekennzeichnet,**
**dass** die Akustikfläche (34, 36) eine Schallreflexionsfläche enthält.

8. Versorgungsvorrichtung nach einem der Ansprüche 1 bis 5,
**dadurch gekennzeichnet,**
**dass** die Akustikfläche (34, 36) wenigstens eine Schallabsorptionsfläche und wenigstens eine Schallreflexionsfläche enthält.

9. Versorgungsvorrichtung nach einem der Ansprüche 1 bis 8,
**dadurch gekennzeichnet,**
**dass** die Akustikfläche (34, 36) aus einem akustisch wirksamen Material gefertigt und/oder in einer akustisch wirksamen Form gebildet ist.

10. Versorgungsvorrichtung nach einem der Ansprüche 1 bis 9,
**dadurch gekennzeichnet,**
**dass** die Akustikfläche (34, 36) wenigstens teilweise optisch reflektierend ausgebildet ist.

11. Versorgungsvorrichtung nach einem der Ansprüche 1 bis 10,
**dadurch gekennzeichnet,**
**dass** die wenigstens eine Montagevorrichtung (22) zur Deckenmontage, zur Wandmontage und/oder zum Aufstellen des Profilkörpers (20) ausgebildet ist.

12. Versorgungsvorrichtung nach einem der Ansprüche 1 bis 11,
**dadurch gekennzeichnet,**
**dass** die wenigstens eine Montagevorrichtung (22) höhenverstellbar ausgebildet ist.

13. Versorgungsvorrichtung nach einem der vorherigen Ansprüche,
**dadurch gekennzeichnet,**
**dass** das wenigstens eine Leuchtenelement ein Leuchtenelement (30) zur direkten Beleuchtung und/oder ein Leuchtenelement (32) zur indirekten Beleuchtung enthält.

14. Versorgungsvorrichtung nach einem der vorherigen Ansprüche,
**dadurch gekennzeichnet,**
**dass** der wenigstens eine Benutzeranschluss (26) ausgewählt ist aus Stromanschlüssen, Wasseranschlüssen, Gasanschlüssen, Druckluftanschlüssen, Datenanschlüssen und Kommunikationsanschlüssen.
